(19) Europäisches Patentamt
European Patent Office
Office européen des brevets

(11) **EP 1 848 114 A2**

(12) **EUROPEAN PATENT APPLICATION**

(43) Date of publication:
24.10.2007 Bulletin 2007/43

(51) Int Cl.:
*H04B 1/707* (2006.01)    *G01S 1/00* (2006.01)

(21) Application number: 07105859.8

(22) Date of filing: 10.04.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK YU

(30) Priority: 19.04.2006 US 406985

(71) Applicant: PC-Tel, Inc.
Chicago, IL 60631 (US)

(72) Inventor: Lu, Wei
Bethesda, MD 20874 (US)

(74) Representative: Fenlon, Christine Lesley
Haseltine Lake
Lincoln House
300 High Holborn
London WC1V 7JH (GB)

(54) **Method of detecting a predetermined sequence in an RF signal using a combination of correlation and FFT**

(57)    A method and apparatus are provided for recognizing a predetermined sequence within a radio frequency signal received on a Doppler faded radio frequency channel. The method includes the steps of correlating a reference sequence with a sequence of elements of the radio frequency signal received on the Doppler faded radio frequency channel and detecting the predetermined sequence within the received signal when a cumulative power level of subsequences of the correlated sequence exceeds a predetermined power level threshold.

Fig. 2

EP 1 848 114 A2

# Description

Field of the Invention

The field of the invention relates to radio frequency communication systems and, more particularly, to the detection of predetermined sequences.

Background of the Invention

The use of training or synchronization sequences in radio frequency transmission is known. Such sequences are typically used in transmission systems in which information is transferred in repeating frames. When used in repeating frames, the sequences are typically used to identify the boundaries of the repeating frame.

The detection of sequences is typically accomplished by correlating the sequence with a reference sequence. As a stream of bits is received, the sequence of bits in incrementally compared with the reference sequence. As each new bit is received, it may cause a previously received bit to incrementally move across a shift register. The locations of the shift register may be logically ANDed with a corresponding bit of the reference sequence. When a match occurs between each of the locations of the correlation buffer and reference sequence, an output is provided indicating the correlation and detection of the sequence.

In addition to providing a means of detecting repeating structures within a frame, correlating sequences can also used to measure distortion on a transmission channel. In this case, the bits may be replaced with symbols that have a predetermined amplitude and phase. As the symbols propagate through the transmission channel, the characteristics of the channel change the amplitude and phase of the transmitted symbols. By knowing the original amplitude and phase of the transmitted sequence a radio frequency receiver may calculate the change caused by the transmission channel and correct the information stream that is transmitted along with the sequence.

While the use of training and synchronization sequences is relatively effective, there are some circumstances where detection is difficult. For example, a radio in a moving vehicle is subject to frequency and phase offset due to multipath propagation of the signal. In the case, where a phase shift approaches 180 degrees, the correlation of sequences may be impossible. Because of the importance of training and correlation sequences in radio transmissions, a need exists for better methods of detecting sequences.

Summary

A method and apparatus are provided for recognizing a predetermined sequence within a radio frequency signal received on a Doppler faded radio frequency channel. The method includes the steps of correlating a reference sequence with a sequence of elements of the radio frequency signal received on the Doppler faded radio frequency channel and detecting the predetermined sequence within the received signal when a cumulative power level of subsequences of the correlated sequence exceeds a predetermined power level threshold.

Brief Description of the Drawings

FIG. 1 depicts a transceiver 10 in accordance with an illustrated embodiment of the invention; and
FIG. 2 depicts a correlator that may be used with the system of FIG. 1.

Detailed Description of an Illustrated Embodiment

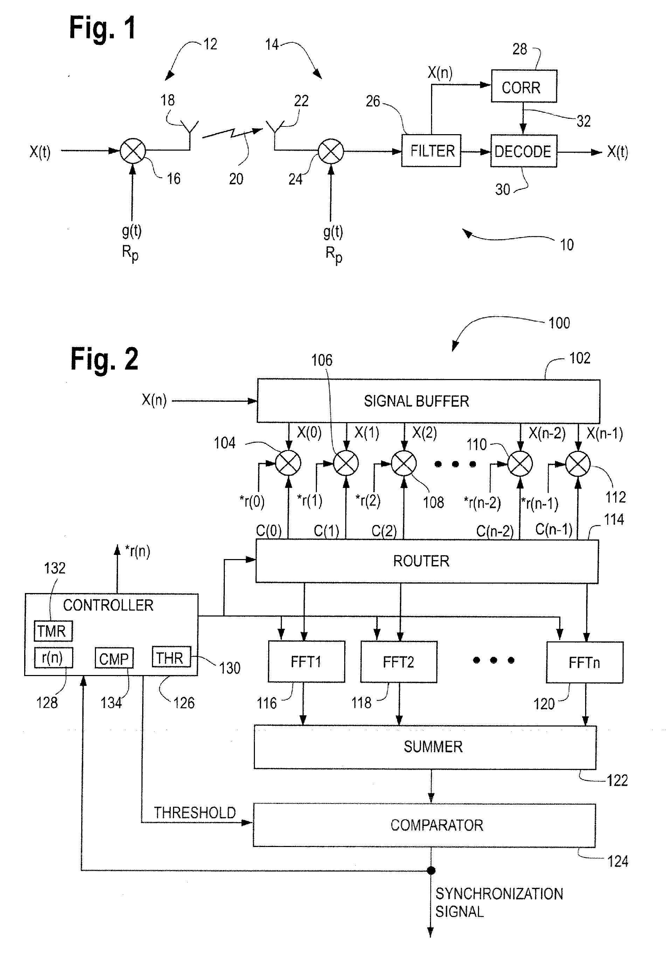

FIG. 1 shows a radio frequency (rf) transceiver system 10 in accordance with an illustrated embodiment of the invention. As shown, the transceiver system 10 may use a repeating frame structure in support of very high speed multimedia services (e.g., full-motion video, Internet access, video conferencing, etc.) under any appropriate rf modulation technique (e.g., Wide Code Division Multiple Access (WCDMA)).

A transmitter 12 of the transceiver system 10 may modulate information elements of a data signal x(t) using a direct sequence spread spectrum technique. In this case, the input signal x(t) at a data rate R is multiplied by a spreading code signal g(t) at a chip rate Rp within a multiplier 16. The resulting spread spectrum signal 20 is transmitted through an antenna 18 at the transmitter 12 and received by an antenna 22 within a receiver 14.

Within the receiver 14, the spread spectrum signal 20 is again multiplied by a spreading code signal g(t) at the chip rate Rp within a multiplier 24 to recover the original signal plus any distortion imparted to the signal by the transmission channel. The recovered signal plus distortion may be filtered in a filter 26 and decoded within a decoder 30.

In order to decode the signal x(n), a correlator 28 is used to detect a predetermined data sequence (e.g., a training or synchronization sequence) r(n) located within the signal x(t). Upon detection of the synchronization or training sequence, the correlator 28 provides a synchronization signal 32 to the decoder 30 as a means of identifying a particular feature of the repeating frame within the signal x(t).

FIG. 2 is a block diagram 100 of the correlator 28 of FIG. 1. The correlator 28 functions to identify a predetermined reference sequence r(n) within a portion x(n) of the signal x(t). However, it should be noted that it is unlikely that an exact match will ever occur between corresponding elements of the reference sequence and the signal sequence (e.g., r(1) and x(1), r(2) and x(2), etc.). The reason is that the transmission channel between antenna 18 and 22 typically alters the signal elements x(0)-x(n-1). In the case where x(t) is a complex valued signal element (e.g., a symbol), the channel often attenuates and/or phase rotates the symbol. In addition, the attenuation and phase rotation are often of short duration and can often change at any point during detection of the reference sequence.

The frequency offsets caused by phase rotation has seriously impaired prior art synchronization efforts based upon correlation alone. In addition, any effort to detect portions of the sequence that have not been affected by frequency offset would likely be unsuccessful because of limited dynamic range and because the noise floor would be dominated by the limited length of the portion.

In general, correlation may be accomplished by a process that can be summarized by the equation

$$CORR=sum(x(n)*conj(r(n))),$$

where n=0 to N-1. However, instead of directly calculating CORR and accepting the unreliable results caused an unknown and varying phase offset, it has been found that a significantly more reliable result is obtained by segmenting the sequence and calculating a power level of each segmented portion. The calculated power levels may then be summed and a predetermined threshold value used to reliably detect the predetermined sequence.

For example, a sequence r(n) can be divided into k segments of M samples each. The correlated values of each segment may be described by the equation

$$R(k)=sum(x(k*M+n)*conj(r(k*M+n)),$$

for signal elements x(t) from n=0 to M-1.

Next, a power spectrum (W) may be calculated for the R sequence as a power spectrum distribution (PSD) in accordance with the equation, W=PSD(R). An efficient way of accomplishing the calculation is through the use of a Fast Fourier Transform (FFT).

In this case, synchronization is detected based upon the peak of the power spectrum. Detection may be accomplished based upon a threshold value.

By changing the selection and size of M, a user of the system 10 can adjust between selectivity and sensitivity of the sequence and the amount of Doppler shift. The selection and size of M also provides a balance between performance, memory usage and processing power.

FIG. 1 depicts a very simplistic example of the correlator 28. A more practical example of the correlator 28 is shown in FIG. 2. As shown in FIG. 2, the input signal x(t) is received by a shift register 102. As each new signal element is received on the left side, the oldest signal element may be discarded from the right side.

Within the shift register 102, the values of x are sequentially multiplied by respective elements of the sequence r. For example, a first value of x (i.e., x(0)) is multiplied by the complex conjugate of a first value of r (i.e., *r(0)) in multiplier 104 to provide a correlated value c(0). Similarly the second value of x (i.e., x(1)) is multiplied by the complex conjugate of the second value of r (i.e., *r(1)), the third value of x (i.e., x(2)) is multiplied by the complex conjugate of the third value of r (i.e., *r(2)), the n-2 value of x (i.e., x(n-2)) is multiplied by the complex conjugate of the second value of r (i.e., *r(n-2)) and the n-1 value of x (i.e., x(n-1)) is multiplied by the complex conjugate of the n-1 value of r (i.e., *r(n-1)) to provide correlated values c(1), c(2)... c(n-2), c(n-1), respectively.

A router 114 may route the values c(n) of the correlated sequence to FFT processors 116, 118, 120 under control of a controller (e.g., a central processing unit (CPU)) 126. The router 114 may be a communication processor that delivers all or a portion of the correlated sequence c(n) to a selected one or more of the FFT processors 116, 118, 120 in an appropriate format (e.g., serial, packet format, etc.).

Within the FFT processors 116, 118, 120, the correlated values c(n) are converted into a corresponding frequency domain representation of the correlated values c(n). The frequency domain representations from the FFT processors 116, 118, 120 are then adjusted and summed to provide the value R. The adjustment of the representations may be accomplished within the FFT processors 116, 118, 120 as an ancillary process. The exact adjustment method depends upon the specific need and channel situation to be handled. The adjustment method can be as simple as a simple pass-through without any modification or as complicated as using an adaptive method for optimized weight/delay/phase shift within each FFT processor 116, 118, 120

The value R may then be compared with a predetermined threshold value 130 within a comparator 124. If the value R exceeds the threshold value 130 then a synchronization pulse 32 is transferred to the decoder 30.

In general, the correlation result c(n) may be divided into any of a number of segments by the controller 126. For example, if the sequence c(n) were to be divided in half, then one-half of the correlated samples (i.e., c(0), c(2) to c(2N-2) would be sent by the router 114 to the first FFT processor 116 and one-half of the correlated values (i.e., c(1), c(3), to c(2N-1)) would be sent by the router 114 to the second FFT processor 118. The division method is not limited to the even-odd method described above, but instead, can take the form of dividing the result in time by sending the first one-half of the samples that are received to the first FFT processor 116 and the second one-half to the second FFT processor 118.

Within the first FFT processor 116, a first frequency spectrum is calculated using the correlated values (i.e., c(0) to c(2N-2)) as samples for the even-odd example and within the second FFT processor 118, a second frequency spectrum is calculated using the correlated values (i.e., c(1) to c(2N-1)) as samples. The results from the first and second FFT processors 116, 118 are summed within the summer 122 via a linear combination in this example.

An equivalent power spectrum is obtained from the combined FFT results in summer 122. The equivalent power spectrum values are compared with the threshold 130 within the comparator 124. When the peak of the equivalent power spectrum exceeds the threshold values, a synchronization pulse is transmitted to the decoder 30.

The correlator 100 may operate dynamically based upon the distortion present within the transmission channel. For example, controller 126 may be provided with a timer 132 that is reset each time a synchronization pulse is sent to the decoder 30. The time value within the timer 132 is compared with a predetermined detection threshold within a comparator 134. The detection threshold is a time value equal to the time of the repeating frame (or some multiple or fraction thereof). If the correlator 100 does not detect a sequence (and issuance of a synchronization pulse 32) for a time period longer than the repeating frame, then the controller 126 may incrementally further segment the processing of the sequence r(n). For example, the controller 126 may begin by dividing the sequence r(n) in half. If a synchronization pulse 32 is not detected for a period longer than one frame, then the controller 126 may divide the sequence r(n) into four equal parts, using four FFT processors 116, 118, 120, and so on.

A specific embodiment of a correlator for detecting a predetermined sequence has been described for the purpose of illustrating the manner in which one possible alternative of the invention is made and used. It should be understood that the implementation of other variations and modifications of embodiments of the invention and its various aspects will be apparent to one skilled in the art, and that the various alternative embodiments of the invention are not limited by the specific embodiments described. Therefore, it is contemplated to cover all possible alternative embodiments of the invention and any and all modifications, variations, or equivalents that fall within the true spirit and scope of the basic underlying principles disclosed and claimed herein.

**Claims**

1. An apparatus for recognizing a predetermined sequence within a radio frequency signal received on a Doppler faded radio frequency channel, the apparatus comprising:

   a plurality of multipliers that provides a correlated sequence by correlating elements of a reference sequence with respective elements of the radio frequency signal received on the Doppler faded radio frequency channel; and
   a comparator that detects the predetermined sequence within the received signal when a cumulative level of frequency domain representations of subsets of the correlated sequence exceeds a predetermined power threshold.

2. The apparatus for recognizing the predetermined sequence as in claim 1 further comprising a controller that divides the correlated sequence into a plurality of subsequences.

3. The apparatus for recognizing the predetermined sequence as in claim 2 further comprising a FFT processor that determines a frequency domain representation of each correlated subsequence at the correlation instant.

4. The apparatus for recognizing the predetermined sequence as in claim 3 further comprising a summer that sums the determined frequency domain representations.

5. The apparatus for recognizing the predetermined sequence as in claim 2 further comprising a timer that is reset each time the comparator detects the predetermined sequence.

6. The apparatus for recognizing the predetermined sequence as in claim 5 further comprising means for comparing a content of the timer with a predetermined detection threshold.

7. The apparatus for recognizing the predetermined sequence as in claim 6 further comprising a controller that further subdivides the plurality of subsequences of the reference sequence when the content of the counter exceeds the predetermined detection threshold.

8. A method of recognizing a predetermined sequence within a radio frequency signal received on a Doppler faded radio frequency channel, such method comprising:

   dividing a reference sequence into a plurality of subsequences;
   correlating elements of the received signal on the Doppler faded radio frequency channel with respective elements of the respective subsequences of the reference sequence;
   determining a corresponding frequency domain representation of each correlated subsequence of the plurality of subsequences;
   summing the determined frequency domain representations of the subsequences; and

**EP 1 848 114 A2**

detecting the predetermined sequence in the received signal when a level of the summed frequency domain representations exceeds a threshold.

# Fig. 1

# Fig. 2